# EUROPÄISCHE PATENTANMELDUNG

(11) **EP 2 439 691 A1**
(43) Veröffentlichungstag der Anmeldung: **11.04.2012**
(21) Anmeldenummer: 11184513.7
(22) Anmeldetag: 10.10.2011
(51) Int. Cl.: G06Q 10/00

(54) **Vorrichtung und Verfahren zum maschinellen Erstellen eines Prozessdiagramms**

(30) Priorität: 11.10.2010 DE 102010042288
(71) Anmelder: Krallmann, Hermann, 14089 Berlin (DE)
(72) Erfinder: Krallmann, Hermann, 14089 Berlin (DE)
(74) Vertreter: Eisenführ, Speiser & Partner

(57) **Zusammenfassung**

Die Erfindung betrifft eine Vorrichtung und ein Verfahren zum maschinellen Erstellen eines Prozessdiagramms, das einen gerichteten Graphen bildet. Erfindungsgemäß umfasst die Vorrichtung eine Tabellenschnittstelle (110) zum Empfangen von nach Spalten und Zeilen strukturierten Objektinformationen über im Prozessdiagramm abzubildende Objekte, wobei die Objekte Funktionen, Ereignisse, Zustände, Organisationseinheiten oder Anwendungssysteme sein können, ein Verarbeitungsmodul (140), das ausgebildet ist, unter Anwendung mindestens einer ersten Verknüpfungsvorschrift (171), die angibt, wie aus der Strukturierung der Objektinformationen Interaktionsinformationen über mindestens eine Interaktion oder logische Verknüpfung zwischen mindestens zwei der Objekte untereinander abzuleiten sind, die empfangenen Objektinformationen in einen Prozessdiagrammdatensatz umzusetzen, in dem die empfangenen Objektinformationen als Knoten und die abgeleiteten Interaktionsinformationen als Kanten zwischen den Knoten definiert sind, und eine Diagrammschnittstelle (120) zum Ausgeben des Prozessdiagrammdatensatzes.

## Beschreibung

Die Erfindung betrifft eine Vorrichtung zum maschinellen Erstellen eines Prozessdiagramms, das einen gerichteten Graphen bildet.

Die Erfindung betrifft weiterhin ein Verfahren zum maschinellen Erstellen eines Prozessdiagramms, das einen gerichteten Graphen bildet.

Die Erfindung betrifft weiterhin ein Datenverarbeitungsgerät mit einer Vorrichtung und zum maschinellen Erstellen eines Prozessdiagramms.

Die Erfindung betrifft weiterhin einen Datenträger, auf dem ein ausführbarer Programmcode gespeichert ist.

Die Erfindung die Verwendung einer eingangs genannten Vorrichtung.

Vorrichtungen und Verfahren zum maschinellen Erstellen von Prozessdiagrammen werden häufig in der Prozessmodellierung eingesetzt. Die Prozessmodellierung dient dazu, Prozesse eines Unternehmens oder einer Organisation zu dokumentieren, zu analysieren und zu verbessern. Insbesondere für die Dokumentation oder Aufnahme von Prozessen sind die Kenntnisse einer Vielzahl von mit den verschiedenen Prozessen vertrauten Mitarbeitern erforderlich. Existierende Vorrichtungen und Verfahren zum maschinellen Erstellen eines Prozessdiagramms sind meist als eigenständige Prozessmodellierungsprogramme umgesetzt und erfordern häufig nicht nur die Bereitstellung der speziellen Software und einer entsprechend leistungsfähigen Hardware, sondern auch Kenntnisse im Umgang mit der jeweiligen Vorrichtung bzw. dem Verfahren.

Weiterhin nachteilig ist an den existierenden Lösungen, dass die Prozessmodellierung, insbesondere die Aufnahme von Prozessen, aufwendig ist im Hinblick sowohl auf Zeit als auch auf Kosten und weiterhin nur durch Personen mit Kenntnissen und Erfahrung auf dem Gebiet der Prozessmodellierung durchgeführt werden kann.

Es ist daher eine Aufgabe der vorliegenden Erfindung, eine Vorrichtung und ein Verfahren zum maschinellen Erstellen eines Prozessdiagramms bereitzustellen, die einen oder mehrere der oben genannten Nachteile verringern oder beseitigen. Insbesondere ist es eine Aufgabe der vorliegenden Erfindung, eine Vorrichtung und ein Verfahren zum maschinellen Erstellen eines Prozessdiagramms bereitzustellen, die eine Erleichterung der Prozessmodellierung ermöglichen, insbesondere die Prozessmodellierung kostengünstiger, schneller und weniger fehleranfällig zu machen.

Diese Aufgabe wird erfindungsgemäß durch eine eingangs genannte Vorrichtung gelöst, die
- eine Tabellenschnittstelle zum Empfangen von nach Spalten und Zeilen strukturierten Objektinformationen über im Prozessdiagramm abzubildende Objekte, wobei die Objekte Funktionen, Ereignisse, Zustände, Organisationseinheiten oder Anwendungssysteme sein können,
- ein Verarbeitungsmodul, das ausgebildet ist, unter Anwendung mindestens einer ersten Verknüpfungsvorschrift, die angibt, wie aus der Strukturierung der Objektinformationen Interaktionsinformationen über mindestens eine Interaktion oder logische Verknüpfung zwischen mindestens zwei der Objekte untereinander abzuleiten sind, die empfangenen Objektinformationen in einen Prozessdiagrammdatensatz umzusetzen, in dem die empfangenen Objektinformationen als Knoten und die abgeleiteten Interaktionsinformationen als Kanten zwischen den Knoten definiert sind, und

Die erfindungsgemäße Vorrichtung ist geeignet, maschinell ein Prozessdiagramm, das einen gerichteten Graphen bildet, zu erstellen. Ein gerichteter Graph umfasst Knoten und diese Knoten verbindende Kanten. In den Knoten sind Objektinformationen, in den Kanten Interaktionsinformationen definiert. Die Objektinformationen enthalten Informationen über in dem Prozessdiagramm abzubildende Objekte. Diese Objekte können Funktionen (beispielsweise Prozesse, Aktivitäten), Ereignisse (beispielsweise das Eintreffen von Post oder einer Kundenanfrage), Zustände (beispielsweise erledigt, offen, verfügbar), Organisationseinheiten (beispielsweise Unternehmensteile, Abteilungen, Gruppen oder einzelne Personen) oder Anwendungssysteme (beispielsweise IT-Systeme, Programme) sein.

Zwischen diesen Objekten existieren Interaktionen oder logische Verknüpfungen (beispielsweise eine zeitliche oder örtliche Abhängigkeit von zwei Objekten voneinander; die Verwendung eines Objekts durch ein anderes die Angabe, dass ein Objekt personalverantwortlich ist für ein anderes).

Die erfindungsgemäße Vorrichtung ermöglicht es, über die Tabellenschnittstelle Objektinformationen zu empfangen, die nach Spalten und Zeilen gegliedert sind. Eine solche Strukturierung der Objektinformationen entspricht beispielsweise einer Tabelle, wie sie aus Tabellenkalkulationsprogrammen oder anderen Programmen wie beispielsweise Textverarbeitungsprogrammen oder Browser, die Tabellendarstellungen erlauben, bekannt ist. Auch eine Strukturierung als sogenannte tabstoppgetrennte oder kommagetrennte Werte (comma separated value, csv) erlaubt eine Gliederung nach Spalten und Zeilen.

Das Verarbeitungsmodul der erfindungsgemäßen Vorrichtung ist ausgebildet, aus diesen Objektinformationen und ihrer Anordnung innerhalb der Gliederung, d. h. der Zuordnung der Objektinformationen zu bestimmten Spalten und Zeilen, abzuleiten, welche Interaktionen oder logische Verknüpfungen zwischen zwei oder mehreren der Objekte untereinander bestehen. Erfindungsgemäß setzt das Verarbeitungsmodul hierzu mindestens eine erste Verknüpfungsvorschrift ein, auf die das Verarbeitungsmodul Zugriff hat. Dazu kann die Verknüpfungsvorschrift in einem internen Speicher der Vorrichtung oder des Verarbeitungsmoduls gespeichert sein oder in die Vorrichtung oder das Verarbeitungsmodul geladen werden. Diese erste Verknüpfungsvorschrift gibt an, welche Interaktionsinformationen aus der Position der Objektinformationen an bestimmten Stellen innerhalb einer Tabelle, d. h. in Abhängigkeit von den Spalten und Zeilen, in denen sich bestimmte Objektinformationen befinden, abzuleiten.

Das Verarbeitungsmodul setzt die empfangenen Objektinformationen und die abgeleiteten Interaktionsinformationen in einen Prozessdiagrammdatensatz um, wobei der Prozessdiagrammdatensatz die empfangenen Objektinformationen und die abgeleiteten Interaktionsinformationen in Form eines gerichteten Graphen enthält, bei dem die Objektinformation als Knoten und die abgeleiteten Interaktionsinformationen als Kanten zwischen den Knoten definiert sind. Dieser maschinell erstellte Prozessdiagrammdatensatz kann über eine Diagrammschnittstelle der erfindungsgemäßen Vorrichtung ausgegeben werden. Vorzugsweise kann der erstellte Prozessdiagrammdatensatz in einer einzigen Datei gespeichert werden.

Aus der Struktur der empfangenen Objektinformationen werden unter Anwendung der mindestens einen ersten Berechnungsvorschrift vorzugsweise auch zusätzliche Informationen über das jeweilige Objekt abgeleitet. Beispielsweise kann aus der Platzierung einer Objektinformation in einer bestimmten Spalte abgeleitet werden, dass es sich dabei um ein Ereignis handelt, während aus der Platzierung in einer anderen Spalte abgeleitet wird, dass es sich um einen Zustand handelt. Bei der Umsetzung der Informationen in einen Prozessdiagrammdatensatz wird dies vorzugsweise derart berücksichtigt, dass unterschiedliche Knotentypen zugeordnet werden, die beispielsweise in einer graphischen Ansicht unterschiedlich dargestellt werden können.

Eine weitere Besonderheit der erfindungsgemäßen Vorrichtung und insbesondere des erfindungsgemäßen Verarbeitungsmoduls und der mindestens einen ersten Verknüpfungsvorschrift ist es, dass die Interaktionsinformationen zumindest teilweise aus der Struktur der empfangenen Objektinformationen abgeleitet werden. Darunter ist zu verstehen, dass beispielsweise aus der Anordnung eines ersten Objekts in einer ersten Zeile und eines weiteren Objekts in einer zweiten Zeile die Interaktionsinformation abgeleitet werden kann, dass das Objekt in der zweiten Zeile zeitlich auf das Objekt in der ersten Zeile folgt und somit diese beiden Objekte als Knoten mit einer dazwischenliegenden Kante, die vom ersten Objekt auf das zweite Objekt zeigt, verbunden werden. Weiterhin kann beispielsweise aus der Positionierung eines Objekts vom Typ "Zustand" in zwei unterschiedlichen Spalten und zwei unterschiedlichen Zeilen die Interaktionsinformation abgeleitet werden, dass zwei Kanten des gerichteten Graphs beide auf demselben Zustandsknoten enden.

Vorzugsweise ist es einem Benutzer vorgegeben, in welcher Tabellenstruktur Objektinformationen einzugeben sind. Weiterhin ist es bevorzugt, dass die mindestens eine erste

Verknüpfungsvorschrift abgestimmt ist auf ein Tabellenformat der zu empfangenden Objektinformationen, bei der die Zeilen und Spalten in einer bestimmten Reihenfolge entsprechend ihrer inhaltlichen Bedeutung angeordnet sind.

Die erfindungsgemäße Vorrichtung bietet mehrere Vorteile:
Die Tabellenschnittstelle und die Diagrammschnittstelle ermöglichen es, die erfindungsgemäße Vorrichtung mit einem externen Programm zu verwenden, das eine tabellenartige Strukturierung von Daten erlaubt.

Vorzugsweise wird die erfindungsgemäße Vorrichtung mit weit verbreiteten Tabellenkalkulationsprogrammen wie beispielsweise dem Programm Excel von Microsoft verwendet. Solche weit verbreiteten Tabellenkalkulationsprogramme haben den Vorteil, dass sie in Unternehmen und Organisationen meist standardmäßig auf jedem Arbeitsplatzrechner installiert sind und somit zum einen keine Software- oder Lizenzkosten oder Aufwand zur Bereitstellung dieser Software erfordern. Weiterhin sind die Nutzer meist im Umgang mit einem solchen weit verbreiteten Tabellenkalkulationsprogramm vertraut.

Beispielsweise können die Objektinformationen in dem Tabellenkalkulationsprogramm nach Spalten und Zeilen strukturiert eingegeben und über die Tabellenschnittstelle der erfindungsgemäßen Vorrichtung empfangen werden. Über die Diagrammschnittstelle der erfindungsgemäßen Vorrichtung können die als Prozessdiagramm in Form eines gerichteten Graphen strukturierten Objektinformationen und Interaktionsinformationen des Prozessdiagrammdatensatzes ausgegeben und vorzugsweise in dem Tabellenkalkulationsprogramm in eine grafische Darstellung des gerichteten Graphen umgesetzt werden.

Auf diese Weise ermöglicht es die erfindungsgemäße Vorrichtung, dass die Eingabe von Objektinformationen für eine Prozessmodellierung auf einer Vielzahl von Arbeitsplatzrechnern ermöglicht wird, ohne dass eine spezielle Prozessmodellierungssoftware auf diesen Arbeitsplatzrechnern installiert werden muss. Vielmehr können die Benutzer an einem ihnen vertrauten Arbeitsplatz mit einem ihnen vertrauten Anwendungsprogramm Objektinformationen eingeben. Dies verringert den mit einer Prozessmodellierung verbundenen Aufwand für die Aufnahme und Dokumentation der Prozesse deutlich, da keine Anschaffung und Installation von spezieller Software erforderlich ist und weiterhin keine besonderen Kenntnisse bei den Nutzern in einer solchen speziellen Prozessmodellierungssoftware erforderlich sind. Vielmehr können Nutzer, bei denen Wissen über die aufzunehmenden Prozesse vorhanden ist, nicht jedoch spezielles Wissen über Prozessmodellierungssoftware und Erfahrung damit, mit der erfindungsgemäßen Vorrichtung ein vertrautes und einfach zu bedienendes Anwendungsprogramm zur Eingabe der Objektinformationen nutzen.

Ein weiterer Vorteil ist, dass mit der erfindungsgemäßen Vorrichtung auch weniger leistungsfähige Computerhardware für die Prozessmodellierung eingesetzt werden kann, die zwar zur Ausführung beispielsweise eines Tabellenkalkulationsprogramms geeignet ist, nicht jedoch für die Ausführung einer speziellen Prozessmodellierungssoftware. Auf diese Weise können Investitionen in leistungsfähigere Computerhardware durch die erfindungsgemäße Vorrichtung reduziert oder ganz vermieden werden.

Ein weiterer Vorteil ist, dass die Eingabe von Objektinformationen über eine den Nutzern vertraute Anwendungsumgebung erfolgt, was die Fehleranfälligkeit der Aufnahme und Dokumentation der Prozesse deutlich verringert, da bereits durch eine Fehlanwendung einer unbekannten oder wenig vertrauten Prozessmodellierungssoftware verursachte Fehler nicht auftreten können.

Indem die Prozesse gleichzeitig von einer Vielzahl von Nutzern auf einer Vielzahl von Arbeitsplatzrechnern, Notebooks oder sonstiger Computer-Hardware aufgenommen werden können, sinkt auch der Zeitbedarf für die Prozessaufnahme.

Die Fehleranfälligkeit der Prozessaufnahme wird weiterhin dadurch reduziert, dass im Wesentlichen Objektinformationen durch Nutzer einzugeben sind, die Interaktionsinformationen aber - zumindest teilweise - aus der Gliederung der eingegebenen Objektinformationen regebasiert (unter Verwendung der mindestens einen ersten Verknüpfungsvorschrift) abgeleitet werden. Auf diese Weise entfällt die Notwendigkeit der Eingabe bestimmter Interaktionsinformationen, was die Fehleranfälligkeit weiter reduziert.

Neben diesen Vereinfachungen ermöglicht es die erfindungsgemäße Vorrichtung jedoch insbesondere durch ihr Verarbeitungsmodul und die mindestens eine erste Verknüpfungsvorschrift, dass trotz der stark vereinfachten Eingabemöglichkeit ein Prozessdiagrammdatensatz erstellt wird, der in seinem Informationsgehalt und seiner Weiterverarbeitbarkeit einer mit einer speziellen Prozessmodellierungssoftware erstellten Datenstruktur weitgehend entspricht. Die erfindungsgemäße Vorrichtung ermöglicht es somit, auf einer Vielzahl von - auch weniger leistungsfähigen - IT-Hardware Prozesse auf eine einfache, schnelle, kostengünstige und wenig fehleranfällige aufzunehmen und einen Prozessdiagrammdatensatz zu erstellen, der einerseits die Umsetzung in eine grafische Darstellung ermöglicht und weiterhin die Weiterverarbeitbarkeit der darin enthaltenen Informationen gewährleistet.

Die Erfindung kann dadurch fortgebildet werden, dass die Diagrammschnittstelle weiterhin ausgebildet ist, einen Prozessdiagrammdatensatz oder einen Teil davon zu empfangen, das Verarbeitungsmodul ausgebildet ist, unter Anwendung mindestens einer zweiten Verknüpfungsvorschrift, die angibt, wie aus dem Prozessdiagrammdatensatz oder einem Teil davon Objektinformationen, die nach Spalten und Zeilen strukturiert sind, abzuleiten sind, den empfangenen Prozessdiagrammdatensatz oder einen Teil davon in Objektinformationen umzusetzen, die nach Spalten und Zeilen strukturiert sind, und die Tabellenschnittstelle weiterhin ausgebildet ist, die Objektinformationen nach Spalten und Zeilen strukturiert auszugeben.

Diese Fortbildungsform ist dadurch gekennzeichnet, dass die Tabellenschnittstelle nicht nur Objektinformationen empfangen kann, sondern Objektinformationen auch nach Spalten und Zeilen strukturiert ausgeben kann. Ebenso ist die Diagrammschnittstelle nicht nur ausgebildet, einen Prozessdiagrammdatensatz auszugeben, sondern auch einen Prozessdiagrammdatensatz oder einen Teil davon zu empfangen. Damit wird sichergestellt, dass über sowohl die Tabellenschnittstelle als auch die Diagrammschnittstelle bidirektional kommuniziert werden kann, d.h. Daten über jede Schnittstelle sowohl empfangen als auch ausgegeben werden können.

Gemäß dieser Fortbildungsform kann das Verarbeitungsmodul entsprechend mindestens einer zweiten Verknüpfungsvorschrift den von der Diagrammschnittstelle empfangenen Prozessdiagrammdatensatz oder Teile davon in Objektinformationen umsetzen, die nach Spalten und Zeilen strukturiert sind. Dabei kann entweder der gesamte Prozessdiagrammdatensatz von der Diagrammschnittstelle empfangen werden oder ein Teil davon.

Diese Fortbildungsform ist insbesondere vorteilhaft, um nach Spalten und Zeilen strukturierte, von einem Benutzer in eine Tabelle eingegebene und über die Tabellenschnittstelle empfangene Objektinformationen zunächst über die Diagrammschnittstelle als Prozessdiagrammdatensatz ausgeben und- beispielsweise in einem Tabellenkalkulationsprogramm - graphisch anzeigen zu lassen. In dieser graphischen Anzeige kann dann ein Benutzer die Daten überprüfen und erforderlichenfalls Änderungen oder Ergänzungen direkt in der grafischen Darstellung des Prozessdiagrammdatensatzes als gerichteter Graph vornehmen. Eine solche Änderung ist beispielsweise die Ergänzung eines Knotens oder eine Kante oder die Änderung einer von einem ersten zu einem zweiten Objekt gerichteten Kante zu einer Kante von dem ersten Objekt zu einem dritten Objekt. Solche Veränderungen können in einem grafisch dargestellten Prozessdiagrammdatensatz häufig leichter erkannt und vorgenommen werden als in einer tabellarischen Ansicht. Daher ist es vorteilhaft, dass mit der Vorrichtung gemäß dieser Fortbildungsform Ergänzungen oder Veränderungen des Prozessdiagrammdatensatzes oder eines Teils davon über die Diagrammschnittstelle empfangen und durch das Verarbeitungsmodul unter Anwendung der mindestens einen zweiten Verknüpfungsvorschrift wieder in nach Spalten und Zeilen strukturierte Objektinformationen umgesetzt werden können.

Weiterhin vorzugsweise können auch die abgeleiteten Interaktionsinformationen in nach Zeilen und Spalten strukturierte Interaktionsinformationen umgesetzt und über die Tabellenschnittstelle ausgegeben werden.

Die Erfindung kann dadurch fortgebildet werden, dass die Tabellenschnittstelle weiterhin ausgebildet ist, nach Spalten und Zeilen strukturierte Attributinformationen über Attribute der im Prozessmodell abzubildenden Objekte oder deren Interaktionen zu empfangen, wobei jedes Attribut einen Attributnamen und einen Attributwert beinhaltet, und das Verarbeitungsmodul ausgebildet ist, unter Anwendung mindestens einer dritten Verknüpfungsvorschrift, die angibt, wie aus der Strukturierung der Attributinformationen deren Zugehörigkeit zu Objekt- oder Interaktionsinformationen abzuleiten ist, die empfangenen Attributinformationen in den Prozessdiagrammdatensatz umzusetzen.

In dieser Fortbildungsform ist vorgesehen, dass neben den Objektinformationen auch Attributinformationen nach Spalten und Zeilen strukturiert über die Tabellenschnittstelle empfangen werden können. Attributinformationen enthalten in Form eines Attributnamens und eines Attributwerts Informationen über Attribute der im Prozessmodell abzubildenden Objekte oder deren Interaktionen, beispielsweise den Attributnamen "Prozessdauer" und den Attributwert "1 Stunde" oder den Attributnamen "Materialkosten" und den Attributwert "EUR 1500,- " oder den Attributnamen "Letzte Benutzeränderung" und den Attributwert "13. September 2010".

Gemäß der bevorzugten Fortbildungsform ist vorgesehen, dass die mindestens eine dritte Verknüpfungsvorschrift des Verarbeitungsmoduls in Abhängigkeit von der Position der jeweiligen Attributinformationen innerhalb der Tabellenstruktur, d.h. je nach Spalte und Zeile der jeweiligen Attributinformation, ableitet, zu welcher konkreten Objekt- oder Interaktionsinformation die jeweilige Attributinformation zuzuordnen ist und setzt die Attributinformationen entsprechend in den Prozessdiagrammdatensatz um.

Neben den bisher genannten Vorteilen weist diese Fortbildungsform weiterhin den Vorteil auf, dass auf diese Weise auch bei der Eingabe von Attributinformationen die Fehleranfälligkeit verringert wird.

Weiterhin ist es bevorzugt, dass auch die Diagrammschnittstelle ausgebildet ist, mit dem empfangenen Prozessdiagrammdatensatz oder eines Teils davon auch im Prozessdiagrammdatensatz enthaltene Attributinformationen zu empfangen. Auf diese Weise können auch die Attributinformationen in einer grafischen Darstellung des Prozessdiagrammdatensatzes als gerichteter Graph verändert oder ergänzt und über die Diagrammschnittstelle empfangen werden, wobei vorzugsweise das Verarbeitungsmodul eine entsprechende weitere Verknüpfungsvorschrift enthält, die aus dem Prozessdiagrammdatensatz oder einem Teil davon nicht nur Objekt- oder Interaktionsinformationen ableitet, sondern auch Attributinformationen, die nach Spalten und Zeilen strukturiert sind und die dann über die Tabellenschnittstelle ausgegeben werden können.

Die Erfindung wird weiterhin vorzugsweise fortgebildet durch einen Speicher, der eine Vielzahl von vorgegebenen Objektinformationen oder vorgegebenen Attributinformationen enthält und die Tabellenschnittstelle ausgebildet ist, Verweise auf eine oder mehrere der vorgegebenen Objekt- oder Attributinformationen zu empfangen und das Verarbeitungsmodul ausgebildet ist, die den Verweisen entsprechenden Objekt- oder Attributinformationen in den Prozessdiagrammdatensatz umzusetzen.

Diese Fortbildungsform hat den Vorteil, dass einem Benutzer verschiedene Informationen vorgegeben werden können, die beispielsweise einem Unternehmens- oder Organisationsstandard entsprechen. Damit wird es einem Benutzer ermöglicht, Verweise auf diese vorgegebenen Informationen auszuwählen, so dass nicht alle Informationen vom Benutzer neu eingegeben werden müssen. Die Tabellenschnittstelle der Vorrichtung dieser Fortbildungsform ist daher entsprechend ausgebildet, diese Verweise auf die vorgegebenen Informationen zu empfangen. Das Verarbeitungsmodul ist in dieser Fortbildungsform dementsprechend ausgebildet, bei der Umsetzung der empfangenen Informationen in den Prozessdiagrammdatensatz auch die jeweiligen den Verweisen entsprechenden Objekt- oder Attributinformationen in den Prozessdiagrammdatensatz zu integrieren.

Die Erfindung kann weiterhin dadurch fortgebildet werden, dass der Speicher weiterhin eine Vielzahl von vorgegebenen Interaktionsinformationen enthält und die Diagrammschnittstelle ausgebildet ist, einen Prozessdiagrammdatensatz mit Verweisen auf eine oder mehrere der vorgegebenen Objekt-, Interaktions- oder Attributinformationen zu empfangen, und das Verarbeitungsmodul ausgebildet ist, die den Verweisen entsprechenden Objekt-, Interaktions- oder Attributinformationen in nach Spalten und Zeilen strukturierte Objekt-, Interaktions- oder Attributinformationen umzusetzen.

In dieser Fortbildungsform wird die Vorgabe von Informationen auch auf die Interaktionsinformationen ausgedehnt. Dadurch wird es einem Benutzer ermöglicht, beispielsweise in einer grafischen Darstellung auch den Prozessdiagrammdatensatz durch Verweise auf eines oder mehrere der vorgegebenen Objekt-, Interaktions- oder Attributinformationen zu verändern oder zu ergänzen. In dieser Fortbildungsform ist dementsprechend auch das Verarbeitungsmodul ausgebildet, die entsprechenden Objekt-, Interaktions- oder Attributinformationen, die den Verweisen entsprechen, in nach Spalten und Zeilen strukturierte Objekt-, Interaktions- oder Attributinformationen umzusetzen.

Auf diese Weise wird es möglich, dass ein Benutzer auch bezüglich der Interaktionsinformationen auf vorgegebene Werte, vorzugsweise unternehmens- oder organisationsindividuelle Standardwerte, zurückgreifen kann. Vorzugsweise können über die Diagrammschnittstelle Verweise auf vorgegebene Objekt-, Interaktions- oder Attributinformationen empfangen werden.

Die Erfindung kann dadurch fortgebildet werden, dass das Verarbeitungsmodul ausgebildet ist, unter Anwendung mindestens einer Kontrollvorschrift zu überprüfen, ob die Objektinformationen, Interaktionsinformationen, Attributinformationen oder der Prozessdiagrammdatensatz vorbestimmte Mindestinformationen enthalten oder eine vorbestimmte Konsistenzeigenschaft aufweisen.

In dieser Fortbildungsform ist vorgesehen, die Korrektheit der empfangenen oder umgesetzten Informationen dahingehend zu überprüfen, ob sie vollständig sind, indem ein Abgleich mit vorbestimmten Mindestinformationen erfolgt. Beispielsweise kann als vorbestimmte Mindestinformation für einen Prozess die Angabe eines Prozessverantwortlichen definiert sein.

Weiterhin kann in dieser Fortbildungsform überprüft werden, ob die Informationen eine vorbestimmte Konsistenzeigenschaft aufweisen, d.h. ob die Informationen plausibel sind und keine Widersprüche enthalten. Eine vorbestimmte Konsistenzeigenschaft kann beispielsweise sein, dass jeder Knoten über mindestens eine Kante mit einem anderen Knoten verbunden sein muss oder jede Kante nur zwei Knoten miteinander verbinden darf.

Durch diese Fortbildungsform kann die Qualität des mit der Vorrichtung erstellten Prozessdiagramms weiter verbessert werden.

Insbesondere ist es bevorzugt, dass das Verarbeitungsmodul ausgebildet ist, eine Warnmeldung zu generieren und über die Tabellenschnittstelle oder die Diagrammschnittstelle auszugeben, wenn die Überprüfung ein negatives Ergebnis hat. Weiterhin ist bevorzugt, dass die Warnmeldung in der Kenntlichmachung derjenigen Objektinformationen, Interaktionsinformationen, Attributinformationen oder desjenigen Teils des Prozessdiagrammdatensatzes besteht, der das negative Ergebnis hervorgerufen hat.

Diese Fortbildungsformen haben den Vorteil, dass auf mögliche Fehler im Prozessdiagramm hingewiesen wird, so dass ein Benutzer die Möglichkeit hat, diese Fehler zu korrigieren oder von einem anderen Nutzer überprüfen zu lassen. Durch die Kenntlichmachung, welche Informationen das negative Überprüfungsergebnis hervorgerufen haben, wird die Identifikation möglicher Fehler weiter vereinfacht.

Eine weitere Fortbildungsform der Erfindung ist vorzugsweise gekennzeichnet durch eine Import-/Export-Schnittstelle, die ausgebildet ist, Datenstrukturen aus einem Prozessmodellierungsprogramm zu empfangen, und weiterhin dadurch gekennzeichnet, dass das Verarbeitungsmodul ausgebildet ist, unter Anwendung mindestens einer vierten Verknüpfungsvorschrift, die angibt, wie aus den Datenstrukturen Objektinformationen, Interaktionsinformationen, Attributinformationen oder Prozessdiagrammdatensätze abgeleitet werden können, die empfangenen Datenstrukturen in einen Prozessdiagrammdatensatz oder in nach Spalten und Zeilen strukturierte Objektinformationen, Interaktionsinformationen oder Attributinformationen umzusetzen.

Weiterhin kann die Vorrichtung vorzugsgemäß dadurch fortgebildet werden, dass das Verarbeitungsmodul ausgebildet ist, unter Anwendung mindestens einer fünften Verknüpfungsvorschrift, die angibt, wie aus den Objektinformationen, Interaktionsinformationen, Attributinformationen oder dem Prozessdiagrammdatensatz Datenstrukturen zur Verwendung in einem Prozessmodellierungsprogramm abgeleitet werden können, die Objektinformationen, Interaktionsinformationen, Attributinformationen oder den Prozessdiagrammdatensatz in eine Datenstruktur für ein Prozessmodellierungsprogramm umzusetzen, und weiterhin gekennzeichnet eine Import-/Export-Schnittstelle, die ausgebildet ist, die Datenstruktur auszugeben, wobei die Import-/Export-Schnittstelle vorzugsweise mit der Import-/Export-Schnittstelle der vorhergehenden Fortbildungsform identisch ist.

Die beiden vorgenannten Ausführungsformen ermöglichen es in vorteilhafter Weise, über eine Import-/Export-Schnittstelle Datenstrukturen aus einem Prozessmodellierungsprogramm zu empfangen oder eine von einem solchen Prozessmodellierungsprogramm weiterverarbeitbare Datenstruktur auszugeben. Dies hat den Vorteil, dass mit der Vorrichtung gemäß dieser Fortbildungsform erstellte Prozessdiagramme mit einem speziellen Prozessmodellierungsprogramm weiterverarbeitet werden können oder mit einem Prozessmodellierungsprogramm erstellte Prozessdiagramme in die Vorrichtung importiert werden können. Die Vorrichtung gemäß dieser Fortbildungsformen weist dazu entsprechend mindestens eine vierte und eine fünfte Verknüpfungsvorschrift auf, die angeben, wie die empfangene Datenstrukturen entsprechend in nach Spalten und Zeilen strukturierte Objektinformationen, Interaktionsinformationen und Attributinformationen oder Prozessdiagrammdatensätze umgesetzt werden können bzw. umgekehrt aus nach Spalten und Zeilen strukturierten Objektinformationen, Interaktionsinformationen und Attributinformationen oder Prozessdiagrammdatensätze entsprechende durch das Prozessmodellierungsprogramm weiterzuverarbeitende Datenstrukturen erzeugt werden können. Auf diese Weise wird sichergestellt, dass mit der Vorrichtung gemäß diesen Fortbildungsformen erzeugte Prozessdiagramme mit speziellen Prozessmodellierungsprogrammen kompatibel sind.

Für alle hier beschriebenen Aspekte und Fortbildungsformen gilt, dass zwei, mehrere oder alle der Verknüpfungsvorschriften in einer gemeinsamen Vorschrift enthalten sein können.

Weiterhin ist es bevorzugt, dass die Vorrichtung ausgebildet ist, den Prozessdiagrammdatensatz derart abzuspeichern, dass die parallele Bearbeitung eines Prozessdiagrammdatensatzes durch mehrere Benutzer mittels mehrerer erfindungsgemäßer Vorrichtungen möglich ist. Bevorzugt wird dazu der Prozessdiagrammdatensatz in einer Datenbankanwendung gespeichert, auf die die erfindungsgemäßen Vorrichtungen Zugriff haben. Auf diese Weise kann die parallele Prozessaufnahme durch eine Vielzahl von Benutzern ermöglicht werden.

Ein weiterer Aspekt der Erfindung ist ein Verfahren zum maschinellen Erstellen eines Prozessdiagramms, das einen gerichteten Graphen bildet, umfassend die Schritte:
- Empfangen von nach Spalten und Zeilen strukturierten Objektinformationen über im Prozessdiagramm abzubildende Objekte, wobei die Objekte Funktionen, Ereignisse, Zustände, Organisationseinheiten oder Anwendungssysteme sein können,
- Umsetzen der empfangenen Objektinformationen in einen Prozessdiagrammdatensatz, in dem die empfangenen Objektinformationen als Knoten und die abgeleiteten Interaktionsinformationen als Kanten zwischen den Knoten definiert sind, unter Anwendung mindestens einer ersten Verknüpfungsvorschrift, die angibt, wie aus der Strukturierung der Objektinformationen Interaktionsinformationen über mindestens eine Interaktion oder logische Verknüpfung zwischen mindestens zwei der Objekte untereinander abzuleiten sind, und
- Ausgeben des Prozessdiagrammdatensatzes.

Das Verfahren wird bevorzugt fortgebildet durch die Schritte:
- Empfangen eines Prozessdiagrammdatensatzes oder eines Teils davon,
- Umsetzen des empfangenen Prozessdiagrammdatensatzes oder eines Teils davon in Objektinformationen, die nach Spalten und Zeilen strukturiert sind, unter Anwendung mindestens einer zweiten Verknüpfungsvorschrift, die angibt, wie aus dem Prozessdiagrammdatensatz oder einem Teil davon Objektinformationen, die nach Spalten und Zeilen strukturiert sind, abzuleiten sind, und
- Ausgeben der Objektinformationen nach Spalten und Zeilen strukturiert.

Das Verfahren wird weiterhin bevorzugt fortgebildet durch die Schritte:
- Empfangen von nach Spalten und Zeilen strukturierten Attributinformationen über Attribute der im Prozessmodell abzubildenden Objekte oder deren Interaktionen, wobei jedes Attribut einen Attributnamen und einen Attributwert beinhaltet, und
- Umsetzen der empfangenen Attributinformationen in den Prozessdiagrammdatensatz unter Anwendung mindestens einer dritten Verknüpfungsvorschrift, die angibt, wie aus der Strukturierung der Attributinformationen deren Zugehörigkeit zu Objekt- oder Interaktionsinformationen abzuleiten ist.

Das Verfahren wird weiterhin bevorzugt fortgebildet durch die Schritte:
- Bereitstellen einer Vielzahl von vorgegebenen Objektinformationen oder vorgegebenen Attributinformationen,
- Empfangen von Verweisen auf eine oder mehrere der vorgegebenen Objekt- oder Attributinformationen,
- Umsetzen der den Verweisen entsprechenden Objekt- oder Attributinformationen in den Prozessdiagrammdatensatz.

Das Verfahren wird weiterhin bevorzugt fortgebildet durch die Schritte:
- Bereitstellen einer Vielzahl von vorgegebenen Interaktionsinformationen,
- Empfangen eines Prozessdiagrammdatensatz mit Verweisen auf eine oder mehrere der vorgegebenen Objekt-, Interaktions- oder Attributinformationen,
- Umsetzen der den Verweisen entsprechenden Objekt-, Interaktions- oder Attributinformationen in nach Spalten und Zeilen strukturierte Objekt-, Interaktions- oder Attributinformationen.

Das Verfahren wird weiterhin bevorzugt fortgebildet durch den Schritt:
- Überprüfen unter Anwendung mindestens einer Kontrollvorschrift, ob die Objektinformationen, Interaktionsinformationen, Attributinformationen oder der Prozessdiagrammdatensatz vorbestimmte Mindestinformationen enthalten oder eine vorbestimmte Konsistenzeigenschaft aufweisen.

Das Verfahren wird weiterhin bevorzugt fortgebildet durch die Schritte:
- Generieren einer Warnmeldung, wenn die Überprüfung ein negatives Ergebnis hat, und
- Ausgeben der Warnmeldung.

Das Verfahren wird weiterhin bevorzugt fortgebildet durch den Schritt:
- Kenntlichmachen derjenigen Objektinformationen, Interaktionsinformationen, Attributinformationen oder derjenigen Teile des Prozessdiagrammdatensatzes besteht, die das negative Ergebnis hervorgerufen haben.

Das Verfahren wird weiterhin bevorzugt fortgebildet durch die Schritte:
- Empfangen von Datenstrukturen aus einem Prozessmodellierungsprogramm,
- Umsetzen der empfangenen Datenstrukturen in einen Prozessdiagrammdatensatz oder in nach Spalten und Zeilen strukturierte Objektinformationen, Interaktionsinformationen oder Attributinformationen, unter Anwendung mindestens einer vierten Verknüpfungsvorschrift, die angibt, wie aus den Datenstrukturen Objektinformationen, Interaktionsinformationen, Attributinformationen oder Prozessdiagrammdatensätze abgeleitet werden können.

Das Verfahren wird weiterhin bevorzugt fortgebildet durch die Schritte:
- Umsetzen der Objektinformationen, Interaktionsinformationen, Attributinformationen oder des Prozessdiagrammdatensatzes in eine Datenstruktur für ein Prozessmodellierungsprogramm unter Anwendung mindestens einer fünften Verknüpfungsvorschrift, die angibt, wie aus den Objektinformationen, Interaktionsinformationen, Attributinformationen oder dem Prozessdiagrammdatensatz Datenstrukturen zur Verwendung in einem Prozessmodellierungsprogramm abgeleitet werden können,
   und
- Ausgeben der Datenstruktur.

Ein weiterer Aspekt der Erfindung ist ein Datenverarbeitungsgerät mit einer erfindungsgemäßen oben beschriebenen Vorrichtung oder einer ihrer Fortbildungen und einer Tabellenkalkulationsvorrichtung, wobei die Tabellenkalkulationsvorrichtung ausgebildet ist,
- nach Spalten und Zeilen strukturierte Objektinformationen, Interaktionsinformationen oder Attributinformationen oder Prozessdiagrammdatensätze von der erfindungsgemäßen Vorrichtung zu empfangen,
- die empfangenen Objektinformationen, Interaktionsinformationen oder Attributinformationen in eine Darstellung in Tabellenform umzusetzen, und
- die empfangenen Prozessdiagrammdatensätze in eine Darstellung in Diagrammform umzusetzen.

Ein weiterer Aspekt der Erfindung ist ein Datenträger, auf dem ein ausführbarer Programmcode gespeichert ist, der beim Ausführen ein Verfahren mit den Schritten nach dem vorhergehenden Anspruch durchführt.

Ein weiterer Aspekt der Erfindung ist die Verwendung einer Vorrichtung nach einem der vorhergehenden Ansprüche zum Erstellen eines maschinellen Erstellen eines Prozessdiagramms mittels eines Tabellenkalkulationsprogramms.

Zu den Ausführungsformen, spezifischen Merkmalen, Varianten und Vorteilen dieser weiteren Aspekte der Erfindung und ihrer Fortbildungen wird auf die zuvor beschriebenen entsprechenden Aspekte der erfindungsgemäßen Vorrichtung und ihrer Fortbildungen verwiesen, die für die jeweiligen weiteren Aspekte der Erfindung relevant sind.

Eine bevorzugte Ausführungsform der Erfindung wird beispielhaft anhand der beiliegenden Figur beschrieben.

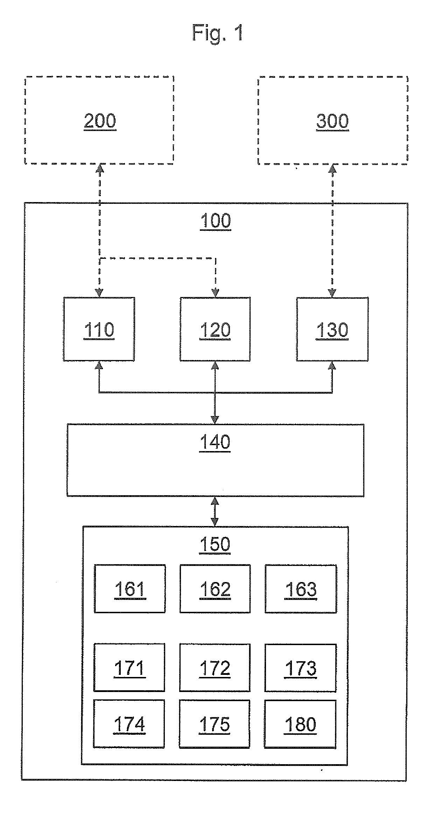

Figur 1 zeigt eine Ausführungsform einer erfindungsgemäßen Vorrichtung 100 zum maschinellen Erstellen eines Prozessdiagramms, das einen gerichteten Graphen bildet. Die Vorrichtung 100 umfasst eine Tabellenschnittstelle 110, eine Diagrammschnittstelle 120 und eine Import-/Exportschnittstelle 130. Weiterhin umfasst die Vorrichtung 100 ein Verarbeitungsmodul 140. Die Vorrichtung 100 umfasst weiterhin einen Speicher 150 in dem vorgegebene Objektinformationen 161, vorgegebene Interaktionsinformationen 162 und vorgegebene Attributinformationen 163 abgespeichert sind. Im Speicher 150 sind weiterhin Verknüpfungsvorschriften 171 bis 175 sowie eine Kontrollvorschrift 180 abgelegt. Die Verknüpfungsvorschriften 171 bis 175 können auch in einer gemeinsamen Vorschrift zusammengefasst sein. Die Verknüpfungsvorschriften 171 bis 175 können auch in einem weiteren Speicher abgelegt sein, der von dem Speicher 150 mit den vorgegebenen Objekt-, Interaktions- und Attributinformationen 161, 162, 163 getrennt ist. Weiterhin müssen die Verknüpfungsvorschriften 171 bis 175 nicht in einem Speicher der Vorrichtung 100 abgelegt sein; es ist ausreichend, wenn das Verarbeitungsmodul 140 Zugriff auf die Verknüpfungsvorschriften 171 bis 175 hat.

In Figur 1 sind weiterhin ein Tabellenkalkulationsprogramm 200 und ein Prozessmodellierungsprogramm 300 abgebildet, die nicht zur erfindungsgemäßen Vorrichtung 100 gehören, vorzugsweise jedoch mit dieser zusammen verwendet werden können.

Die Tabellenschnittstelle 110 ist ausgebildet, nach Spalten und Zeilen strukturierte Objektinformationen über im Prozessdiagramm abzubildende Objekte zu empfangen und auszugeben. Vorzugsweise empfängt die Tabellenschnittstelle 110 die nach Spalten und Zeilen strukturierten Objektinformationen von einem Tabellenkalkulationsprogramm 200 und gibt nach Spalten und Zeilen strukturierte Objektinformationen auch an ein Tabellenkalkulationsprogramm 200 aus. Von der Tabellenschnittstelle 110 empfangene nach Spalten und Zeilen strukturierte Objektinformationen werden im Verarbeitungsmodul 140 unter Anwendung mindestens einer ersten Verknüpfungsvorschrift 171 in einem Prozessdiagrammdatensatz umgesetzt.

Die mindestens eine erste Verknüpfungsvorschrift 171 gibt dabei an, wie aus der Strukturierung der Objektinformationen Interaktionsinformationen über mindestens eine Interaktion oder logische Verknüpfung zwischen mindestens zwei der Objekte untereinander abzuleiten sind. In dem erstellten Prozessdiagrammdatensatz sind die empfangenen Objekte als Knoten und die abgeleiteten Interaktionsinformationen als Kanten zwischen den Knoten definiert. Die Diagrammschnittstelle 120 ist ausgebildet, den erstellten Prozessdiagrammdatensatz auszugeben.

Die Diagrammschnittstelle 120 ist weiterhin ausgebildet, einen Prozessdiagrammdatensatz oder einen Teil davon zu empfangen, vorzugsweise vom Tabellenkalkulationsprogramm 200. Das Verarbeitungsmodul 140 ist weiterhin ausgebildet, unter Anwendung mindestens einer zweiten Verknüpfungsvorschrift 120 aus dem empfangenen Prozessdiagrammdatensatz oder einem Teil davon, Objektinformationen, die nach Spalten und Zeilen strukturiert sind, abzuleiten. Die Tabellenschnittstelle 110 ist weiterhin ausgebildet, die Objektinformationen nach Spalten und Zeilen strukturiert auszugeben, vorzugsweise ebenfalls an das Tabellenkalkulationsprogramm 200.

Wenn über die Tabellenschnittstelle 110 auch nach Spalten und Zeilen strukturierte Attributinformationen empfangen werden, werden diese in Abhängigkeit von Ihrer Strukturierung und unter Anwendung einer dritten Prüfungsvorschrift 173 zu bestimmten Objekt- oder Interaktionsinformationen zugeordnet und ebenfalls in den Prozessdiagrammdatensatz umgesetzt. Die Tabellenschnittstelle 110 ist weiterhin auch ausgebildet, auch Attributinformationen nach Zeilen und Spalten strukturiert auszugeben.

Weiterhin ist es bevorzugt, dass auch im Prozessdiagrammdatensatz Interaktionsinformationen von dem Verarbeitungsmodul 140 in nach Zeilen und Spalten strukturierte Interaktionsinformationen umgesetzt und über die Tabellenschnittstelle 110 ausgegeben werden können.

Die im Speicher 150 abgelegten vorgegebenen Objektinformationen 161, Interaktionsinformationen 162 und Attributinformationen 163 enthalten vorzugsweise unternehmens- oder organisationsindividuelle Standardinformationen. Vorzugsweise kann ein Benutzer beim Eingeben von Daten aus diesen vorgegebenen Objekt-, Interaktions-, und Attributinformationen 161, 162, 163 auswählen, so dass er nicht sämtliche Informationen neu eingeben muss.

Die über die Tabellenschnittstelle 110 empfangenen, nach Zeilen und Spalten strukturierten Objekt- oder Attributinformationen können daher auch Verweise auf eine oder mehrere der vorgegebenen Objekt- oder Attributinformationen enthalten, die durch das Verarbeitungsmodul 140 ebenfalls entsprechend in den Prozessdiagrammdatensatz umgesetzt werden. Weiterhin kann beispielsweise ein über die Diagrammschnittstelle 120 empfangener Prozessdiagrammdatensatz auch Verweise auf vorgegebene Objekt-, Interaktions- oder Attributinformationen 161, 162, 163 enthalten, die vom Verarbeitungsmodul 140 entsprechend in nach Spalten und Zeilen strukturierte Objekt-, Interaktions- oder Attributinformationen umgesetzt werden können.

Das Verarbeitungsmodul 140 ist weiterhin ausgebildet, unter Anwendung der mindestens einen Kontrollvorschrift 180 zu überprüfen, ob die Objektinformationen, Interaktionsinformationen, Attributinformationen oder der Prozessdiagrammdatensatz vorbestimmte Mindestinformationen enthalten oder eine vorbestimmte Konsistenzeigenschaft aufweisen. Wenn die Überprüfung ein negatives Ergebnis ergibt, wird durch das Verarbeitungsmodul 140 eine Warnmeldung generiert und über die Tabellenschnittstelle 110 oder die Diagrammschnittstelle 120 ausgegeben, vorzugsweise durch Kenntlichmachung derjenigen Objekt-, Interaktions- oder Attributinformationen oder derjenigen Teile des Prozessdatensatzes, die zu dem negativen Überprüfungsergebnis geführt haben.

Die Import-/Export-Schnittstelle ist ausgebildet, Datenstrukturen, vorzugsweise aus einem Prozessmodellierungsprogramm 300, zu empfangen. Das Prozessmodellierungsprogramm 300 kann beispielsweise eine Software wie ARIS sein. Die Import-/Export-Schnittstelle ist weiterhin ausgebildet, eine Datenstruktur, vorzugsweise an ein Prozessmodellierungsprogramm 300, auszugeben.

Das Verarbeitungsmodul 140 ist ausgebildet, unter Anwendung mindestens einer vierten Verknüpfungsvorschrift 174 die empfangenen Datenstrukturen in einen Prozessdiagrammdatensatz oder in nach Spalten und Zeilen strukturierte Objektinformationen, Interaktionsinformationen oder Attributinformationen umzusetzen. Weiterhin ist das Verarbeitungsmodul ausgebildet, unter Anwendung mindestens einer fünften Verknüpfungsvorschrift 175 Objekt-, Interaktions- oder Attributinformationen oder den Prozessdiagrammdatensatz in eine Datenstruktur umzusetzen, die von einem Prozessmodellierungsprogramm 300 eingelesen, angezeigt und weiterverarbeitet werden kann.

## Patentansprüche

1. Vorrichtung (100) zum maschinellen Erstellen eines Prozessdiagramms, das einen gerichteten Graphen bildet, umfassend
- eine Tabellenschnittstelle (110) zum Empfangen von nach Spalten und Zeilen strukturierten Objektinformationen über im Prozessdiagramm abzubildende Objekte, wobei die Objekte Funktionen, Ereignisse, Zustände, Organisationseinheiten oder Anwendungssysteme sein können,
- ein Verarbeitungsmodul (140), das ausgebildet ist, unter Anwendung mindestens einer ersten Verknüpfungsvorschrift (171), die angibt, wie aus der Strukturierung der Objektinformationen Interaktionsinformationen über mindestens eine Interaktion oder logische Verknüpfung zwischen mindestens zwei der Objekte untereinander abzuleiten sind, die empfangenen Objektinformationen in einen Prozessdiagrammdatensatz umzusetzen, in dem die empfangenen Objektinformationen als Knoten und die abgeleiteten Interaktionsinformationen als Kanten zwischen den Knoten definiert sind, und
- eine Diagrammschnittstelle (120) zum Ausgeben des Prozessdiagrammdatensatzes.

2. Vorrichtung (100) nach dem vorhergehenden Anspruch,
**dadurch gekennzeichnet, dass**
- die Diagrammschnittstelle (120) weiterhin ausgebildet ist, einen Prozessdiagrammdatensatz oder einen Teil davon zu empfangen,
- das Verarbeitungsmodul (140) ausgebildet ist, unter Anwendung mindestens einer zweiten Verknüpfungsvorschrift (172), die angibt, wie aus dem Prozessdiagrammdatensatz oder einem Teil davon Objektinformationen, die nach Spalten und Zeilen strukturiert sind, abzuleiten sind, den empfangenen Prozessdiagrammdatensatz oder einen Teil davon in Objektinformationen umzusetzen, die nach Spalten und Zeilen strukturiert sind, und
- die Tabellenschnittstelle (110) weiterhin ausgebildet ist, die Objektinformationen nach Spalten und Zeilen strukturiert auszugeben.

3. Vorrichtung (100) nach einem der beiden vorhergehenden Ansprüche,
**dadurch gekennzeichnet, dass**
- die Tabellenschnittstelle (110) weiterhin ausgebildet ist, nach Spalten und Zeilen strukturierte Attributinformationen über Attribute der im Prozessmodell abzubildenden Objekte oder deren Interaktionen zu empfangen, wobei jedes Attribut einen Attributnamen und einen Attributwert beinhaltet, und
- das Verarbeitungsmodul (140) ausgebildet ist, unter Anwendung mindestens einer dritten Verknüpfungsvorschrift (173), die angibt, wie aus der Strukturierung der Attributinformationen deren Zugehörigkeit zu Objekt- oder Interaktionsinformationen abzuleiten ist, die empfangenen Attributinformationen in den Prozessdiagrammdatensatz umzusetzen.

4. Vorrichtung (100) nach einem der vorhergehenden Ansprüche,
**gekennzeichnet durch** einen Speicher (150), der eine Vielzahl von vorgegebenen Objektinformationen (161) oder vorgegebenen Attributinformationen (163) enthält und die Tabellenschnittstelle (110) ausgebildet ist, Verweise auf eine oder mehrere der vorgegebenen Objekt- oder Attributinformationen zu empfangen und das Verarbeitungsmodul (140) ausgebildet ist, die den Verweisen entsprechenden Objekt- oder Attributinformationen in den Prozessdiagrammdatensatz umzusetzen.

5. Vorrichtung (100) nach dem vorhergehenden Anspruch,
**dadurch gekennzeichnet, dass** der Speicher (150) weiterhin eine Vielzahl von vorgegebenen Interaktionsinformationen (162) enthält und die Diagrammschnittstelle (120) ausgebildet ist, einen Prozessdiagrammdatensatz mit Verweisen auf eine oder mehrere der vorgegebenen Objekt-, Interaktions- oder Attributinformationen (161, 162, 163) zu empfangen, und das Verarbeitungsmodul (140) ausgebildet ist, die den Verweisen entsprechenden Objekt-, Interaktions- oder Attributinformationen (161, 162, 163) in nach Spalten und Zeilen strukturierte Objekt-, Interaktions- oder Attributinformationen umzusetzen.

6. Vorrichtung (100) nach einem der vorhergehenden Ansprüche,
**dadurch gekennzeichnet, dass** Verarbeitungsmodul (140) ausgebildet ist, unter Anwendung mindestens einer Kontrollvorschrift (180) zu überprüfen, ob die Objektinformationen, Interaktionsinformationen, Attributinformationen oder der Prozessdiagrammdatensatz vorbestimmte Mindestinformationen enthalten oder eine vorbestimmte Konsistenzeigenschaft aufweisen.

7. Vorrichtung (100) nach dem vorhergehenden Anspruch,
**dadurch gekennzeichnet, dass** das Verarbeitungsmodul (140) ausgebildet ist, eine Warnmeldung zu generieren und über die Tabellenschnittstelle (110) oder die Diagrammschnittstelle (120) auszugeben, wenn die Überprüfung ein negatives Ergebnis hat.

8. Vorrichtung (100) nach dem vorhergehenden Anspruch,
**dadurch gekennzeichnet, dass** die Warnmeldung in der Kenntlichmachung derjenigen Objektinformationen, Interaktionsinformationen, Attributinformationen oder derjenigen Teile des Prozessdiagrammdatensatzes besteht, die das negative Ergebnis hervorgerufen haben.

9. Vorrichtung (100) nach einem der vorhergehenden Ansprüche,
- **gekennzeichnet durch** eine Import-/Export-Schnittstelle (130), die ausgebildet ist, Datenstrukturen aus einem Prozessmodellierungsprogramm zu empfangen,
- und weiterhin **dadurch** gekennzeichnet, dass das Verarbeitungsmodul (140) ausgebildet ist, unter Anwendung mindestens einer vierten Verknüpfungsvorschrift (174), die angibt, wie aus den Datenstrukturen Objektinformationen, Interaktionsinformationen, Attributinformationen oder Prozessdiagrammdatensätze abgeleitet werden können, die empfangenen Datenstrukturen in einen Prozessdiagrammdatensatz oder in nach Spalten und Zeilen strukturierte Objektinformationen, Interaktionsinformationen oder Attributinformationen umzusetzen.

10. Vorrichtung (100) nach einem der vorhergehenden Ansprüche,
**dadurch gekennzeichnet, dass**
- das Verarbeitungsmodul (140) ausgebildet ist, unter Anwendung mindestens einer fünften Verknüpfungsvorschrift (175), die angibt, wie aus den Objektinformationen, Interaktionsinformationen, Attributinformationen oder dem Prozessdiagrammdatensatz Datenstrukturen zur Verwendung in einem Prozessmodellierungsprogramm abgeleitet werden können, die Objektinformationen, Interaktionsinformationen, Attributinformationen oder den Prozessdiagrammdatensatz in eine Datenstruktur für ein Prozessmodellierungsprogramm umzusetzen,
- und weiterhin gekennzeichnet eine Import-/Export-Schnittstelle (130), die ausgebildet ist, die Datenstruktur auszugeben, wobei die Import-/Export-Schnittstelle vorzugsweise mit der Import-/Export-Schnittstelle des vorhergehenden Anspruchs identisch ist.

11. Verfahren zum maschinellen Erstellen eines Prozessdiagramms, das einen gerichteten Graphen bildet,
umfassend die Schritte:
- Empfangen von nach Spalten und Zeilen strukturierten Objektinformationen über im Prozessdiagramm abzubildende Objekte, wobei die Objekte Funktionen, Ereignisse, Zustände, Organisationseinheiten oder Anwendungssysteme sein können,
- Umsetzen der empfangenen Objektinformationen in einen Prozessdiagrammdatensatz, in dem die empfangenen Objektinformationen als Knoten und die abgeleiteten Interaktionsinformationen als Kanten zwischen den Knoten definiert sind, unter Anwendung mindestens einer ersten Verknüpfungsvorschrift (171), die angibt, wie aus der Strukturierung der Objektinformationen Interaktionsinformationen über mindestens eine Interaktion oder logische Verknüpfung zwischen mindestens zwei der Objekte untereinander abzuleiten sind, und
- Ausgeben des Prozessdiagrammdatensatzes.

12. Datenverarbeitungsgerät mit einer Vorrichtung (100) nach einem der vorhergehenden Ansprüche und einer Tabellenkalkulationsvorrichtung, wobei die Tabellenkalkulationsvorrichtung ausgebildet ist,
- nach Spalten und Zeilen strukturierte Objektinformationen, Interaktionsinformationen oder Attributinformationen oder Prozessdiagrammdatensätze von der Vorrichtung nach einem der vorhergehenden Ansprüche zu empfangen,
- die empfangenen Objektinformationen, Interaktionsinformationen oder Attributinformationen in eine Darstellung in Tabellenform umzusetzen und
- die empfangenen Prozessdiagrammdatensätze in eine Darstellung in Diagrammform umzusetzen.

13. Datenträger auf dem ein ausführbarer Programmcode gespeichert ist, der beim Ausführen ein Verfahren mit den Schritten nach dem vorhergehenden Anspruch durchführt.

14. Verwendung einer Vorrichtung nach einem der vorhergehenden Ansprüche zum Erstellen eines maschinellen Erstellen eines Prozessdiagramms mittels eines Tabellenkalkulationsprogramms.
